# EUROPEAN PATENT SPECIFICATION

(11) **EP 4 248 806 B1**
(45) Date of publication and mention of the grant of the patent: **24.09.2025**
(21) Application number: 21957316.9
(22) Date of filing: 29.11.2021
(51) Int. Cl.: A47G 27/02, B32B 27/02

(54) **CARPET MAT**
TEPPICHMATTE
TAPIS DE PIED

(30) Priority: 17.09.2021 CN 202111093631
(43) Date of publication of application: 27.09.2023
(73) Proprietor: Kunshan Yijia Ju Textile Co., Ltd., Kunshan, Jiangsu 215345 (CN)
(72) Inventor: CAO, Shunlin, Suzhou, Jiangsu 215345 (CN); ZHANG, Yi, Suzhou, Jiangsu 215345 (CN); ZHAI, Zixiang, Suzhou, Jiangsu 215345 (CN); SUN, Yuhao, Suzhou, Jiangsu 215345 (CN)
(74) Representative: Bayramoglu et al.
(86) International application number: PCT/CN2021/133812
(87) International publication number: WO 2023/040052

(56) References cited:
- WO-A1-2021/031492
- CN-A- 110 393 413
- CN-A- 110 421 913
- CN-A- 112 659 687
- CN-A- 113 062 027
- CN-A- 113 598 588
- CN-U- 203 897 956
- JP-A- 2013 043 558
- JP-A- H01 313 011
- JP-U- 3 030 759
- JP-U- H04 115 405
- US-A- 3 718 725

## Description

### TECHNICAL FIELD

The present disclosure relates to the field of carpets in the textile industry, and in particular to a carpet pad.

### BACKGROUND

As a product for decorating homes or offices, carpets have been widely recognized by the public. However, at present, traditional carpets on the market are inconvenient to wash with water, and most of them are prone to slipping on smooth surfaces. To reduce the risk of personnel falling due to carpet slippage, it is necessary to lay an anti-slip pad underneath the carpet to hook with the carpet. Currently, there is a practice of laying an anti-slip fabric such as a polyvinyl chloride (PVC) mesh or dotted fabric beneath a traditional carpet. However, the anti-slip fabric is light, thin, easy to wrinkle, not wear-resistant, and unable to hook with the carpet above, and there is still a risk of personnel falling due to carpet slippage. Therefore, the further promotion and use of carpets are affected.

Chinese Patent Application CN201921334346. X provides an anti-slip adhesive cushion for a carpet. The anti-slip adhesive cushion for the carpet includes a bottom anti-slip and waterproof layer and a top bonding layer. The bonding layer is a single-sided fabric with multiple protruding monofilaments. Specifically, the bonding layer is a single-sided fabric with protruding monofilaments of 20 D or above, or is a single-sided structure layer formed by cutting a three-dimensional mesh structure layer. The three-dimensional mesh structure layer includes an upper warp-knitted mesh fabric, a lower warp-knitted mesh fabric, and multiple polyester (PE), polypropylene (PP) or nylon monofilaments located between the upper warp-knitted mesh fabric and the lower warp-knitted mesh fabric. The multiple PE, PP or nylon monofilaments are vertically arranged, and connect the upper warp-knitted mesh fabric with the lower warp-knitted mesh fabric. The anti-slip adhesive cushion can be combined with various carpet surface layers with moderate bonding strength to avoid slippage and warping of the carpet due to low bonding force. However, the PE, PP or nylon monofilaments in the anti-slip cushion are prone to deformation, falling off, and pricking hands after long-term use, causing unpleasant user experience. In addition, after being used together with a traditional carpet, the monofilaments in the anti-slip cushion have a low hooking force, especially in a vertical direction, and thus require a press to hook with the carpet surface layer above. JP 3 030759 U discloses a carpet pad according to the preamble of claim 1.

### SUMMARY

The present invention provides a novel carpet pad and is defined in the appended claims. The present invention solves the problems that the polyester (PE), polypropylene (PP) or nylon monofilaments in the traditional anti-slip pad and anti-slip adhesive cushion designed for a carpet have a weak hooking force and are prone to pricking hands and falling off.

The objective of the present invention is achieved by the following technical solutions. A first aspect of the present invention is defined in claim 1.

The protruding monofilaments on the hook layer are heat-treated to make their top ends melted/softened into the small bumps. The heat-treated protruding monofilaments have a certain degree of curvature and inclination, and thus can firmly hook with various carpets above and provide a large friction force, thereby playing a locking role on the carpet above.

In an implementation solution of the present invention, the protruding monofilaments have a height of 0.50-10 mm and a fineness of 18-4,400 DTEX. If the height of the protruding monofilaments is too large, it will cause the hook layer to not fit tightly with the carpet. As a result, the carpet will experience displacement under an external force, making it easy for people walking on the carpet to fall. If the height of the protruding monofilaments is too small, the protruding monofilaments will not be able to firmly hook with the carpet. If the fineness of the protruding monofilaments is too small, the protruding monofilaments are prone to fracture, and the bumps formed by heat treatment will be too small, resulting in a poor hooking effect. If the fineness of the protruding monofilaments is too large, the protruding monofilaments are not easily bent during heat treatment, resulting in failed locking, and the bumps formed during heat treatment will be too large, causing damage to the carpet during disassembly. If the fineness of the protruding monofilaments is too large, the protruding monofilaments will be excessively hard to prick hands.

In some embodiments, the protruding monofilaments have a fineness of 20-800 DTEX.

In an implementation solution of the present invention, there are 6-80 protruding monofilaments per square centimeter. If the density of the protruding monofilaments is too large, the multiple protruding monofilaments may not form the small bumps separately. Instead, more than one monofilament is prone to be heated together to form a large bump. The large bump will not easily enter a back gap of the carpet, making it impossible to hook with the carpet, thereby failing to achieve a locking function. If the density of the protruding monofilaments is too small, the quantity of the protruding monofilaments will be insufficient, resulting in an insufficient hooking force and degradation in the anti-slip performance.

In an implementation solution of the present invention, the protruding monofilaments are made of one of polyester (PE), polypropylene (PP), and nylon.

In an implementation solution not forming part of the claimed invention, the protruding monofilaments are prepared by one of knitting, tatting, tufting, flocking, and warp/weft knitting.

In an implementation solution not forming part of the claimed invention, the protruding monofilaments are prepared on the hook layer by a tufting or flocking process.

In an implementation solution not forming part of the claimed invention, the protruding monofilaments are prepared when the hook layer is prepared by a warp/weft knitting or tatting process.

In an implementation solution of the present invention, the hook layer has a thickness of 0.50-10 mm.

In an implementation solution of the present invention, the carpet pad is combined with a carpet surface layer. The heat-treated carpet pad can be freely combined with various carpets, knitted fabrics, and woven fabrics to form a combination carpet. The combination carpet can be repeatedly disassembled without damaging the weave structure of the upper and lower layers.

A second aspect of the present invention further provides a preparation method of the above-mentioned carpet pad, including the following steps:
A1: preparation of the hook layer: preparing a cut pile fabric with the protruding monofilaments on an upper surface to form the hook layer;
A2: heat treatment of the protruding monofilaments: melting/softening, by a heat treatment process, the top ends of the protruding monofilaments on the hook layer, and cooling the top ends of the protruding monofilaments to form the small bumps, where the protruding monofilaments are inclined irregularly and bent; and
A3: preparation of the anti-slip layer: preparing the anti-slip layer on a lower surface of the hook layer.

In an implementation solution not forming part of the claimed invention, if a weft knitting or knitting process is used, there is an intermediate layer formed between the hook layer and the anti-slip layer. The intermediate layer is made of one of a non-woven fabric, a knitted fabric, and a woven fabric. The intermediate layer has a certain level of support, comfort, flatness, and stable size, playing a supporting role.

In an implementation solution not forming part of the claimed invention, the intermediate layer is removable to directly laminate the hook layer with the anti-slip layer.

In an implementation scheme not forming part of the claimed invention, the anti-slip layer includes a foam latex layer, a thermoplastic elastomer material layer, an acrylic resin layer, an ethyl vinyl acetate (EVA) foam layer, a polyurethane (PU) foam layer, a non-woven fabric layer, a hot melt adhesive layer, cross-linked polyethylene foam (XPE) foam, an irradiated cross-linked polyethylene (IXPE) foam layer, a knitted fabric, and a woven fabric.

In an implementation scheme of the present invention, in step A2, the heat treatment is implemented by flame burning, and specifically includes: placing the hook layer above a flame of a flame laminating machine to melt/soften the top ends of the protruding monofilaments on the hook layer, where the flame is at 400°C-1,000°C, 0.1-10 cm high, and approximately 1-5 cm far from the hook layer; moving, by a roller behind the flame laminating machine, the burnt fabric away from the flame; and cooling the top ends of the protruding monofilaments to form the small bumps, where the protruding monofilaments are inclined irregularly and bent.

In some embodiments, the flame is 1-5 cm high.

In an implementation solution of the present invention , a traction speed of the roller is 2-20 m/min.

In an implementation scheme of the present invention, in step A2, the heat treatment is implemented by far-infrared baking, and specifically includes: placing the hook layer in a mesh-belt type far-infrared oven to melt/soften the top ends of the protruding monofilaments on the hook layer, where a top part of the mesh-belt type far-infrared oven is provided with a far-infrared tube, and the far-infrared tube is 0-20 cm far from a carpet and configured to emit a far-infrared ray at 180°C-800°C; and cooling the top ends of the protruding monofilaments to form the small bumps, where the protruding monofilaments are inclined irregularly and bent.

In some embodiments, the far-infrared tube is 3-20 cm far from the carpet.

In an implementation of the present invention, a running speed of a mesh belt is 2-15 m/min.

In an implementation solution of the present invention, in step A2, the heat treatment is implemented by a heating oven, and specifically includes: placing the hook layer in the heating oven to melt/soften the top ends of the protruding monofilaments on the hook layer at 120°C-230°C; moving, by a mesh belt or a roller, the hook layer away from a flame; and positioning the hook layer between pressure rollers of a rolling traction device; and allowing the protruding monofilaments of the hook layer in a softened state to pass through the pressure rollers, such that the protruding monofilaments are bent and the top ends of the protruding monofilaments are formed into the small bumps.

In an implementation solution of the present invention, a pressure of upper and lower pressure rollers is 0.2-10 kg, adjustable by a cylinder.

In an implementation solution of the present invention , a running speed of the mesh belt or roller is 2-15 m/min.

In an implementation scheme of the present invention, the heat-treated hook layer is subjected to anti-slip, water-repellent, and moisture-proof treatment.

In an implementation scheme of the present invention, a sequence of steps A2 and A3 is changeable to first laminate and then heat-treat the hook layer and the anti-slip layer.

In the present invention, during the heat treatment process, if the flame temperature is too high, the carpet is too close to the heat source, or the traction speed is too slow, it will cause the yarn and substrate to melt directly and cause scrap. If the flame temperature is too low, the carpet is too far from the heat source, or the traction speed is too fast, it will cause the protruding monofilaments to not form the bumps.

Compared with the prior art, the present invention has the following beneficial effects:
1. The present invention performs heat treatment on the protruding monofilaments and the hook layer, causing the protruding monofilaments to bend and hook with the carpet above, thereby achieving a high bonding force, a high friction force, and firm hooking.
2. The present invention avoids detachment of the monofilaments on the hook layer through heat treatment.
3. The present invention curves the protruding monofilaments on the hook layer and passivates the surface of the small bumps, avoiding the injury of the protruding monofilaments to hands, and enhancing the locking effect of the protruding monofilament on the carpet above.

### BRIEF DESCRIPTION OF THE DRAWINGS

Other features, objectives, and advantages of the present invention will become more apparent by reading the detailed description of non-limiting embodiments with reference to the following drawings.
FIG. 1 is a schematic diagram of a heat-treated carpet pad not forming part of the invention,
FIG. 2 is a schematic diagram of a heat-treated carpet pad according to the invention; and
FIG. 3 is a schematic diagram of a heat-treated carpet pad not forming part of the invention.

Reference Numerals: 1. hook layer with protruding monofilaments on surface; 2. intermediate layer; 3. anti-slip layer; and 4. flock layer.

### DETAILED DESCRIPTION OF THE EMBODIMENTS

The present invention is described in detail below with reference to the embodiment 3. Embodiments 1,2 and 4-6 are not forming part of the invention but are useful to understand the invention.

### Embodiment 1

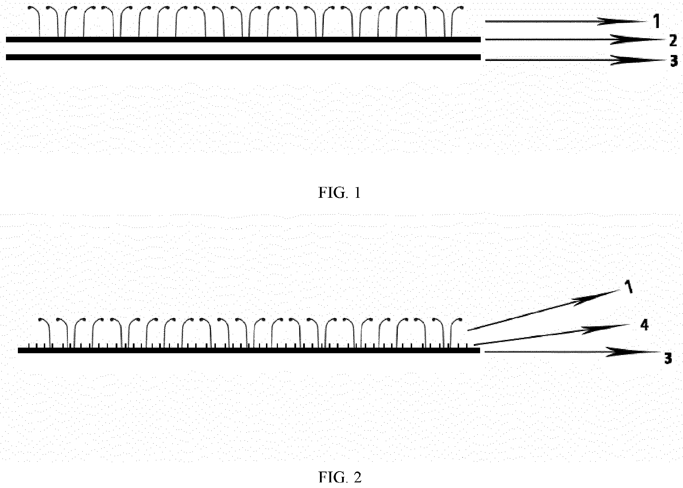

This embodiment not forming part of the invention relates to a carpet pad. As shown in FIG. 1, the carpet pad includes hook layer 1, intermediate layer 2, and anti-slip layer 3 sequentially from top to bottom. A surface of the hook layer is provided with protruding monofilaments.

The carpet pad is prepared by heat treatment as follows.
1) Material selection. A three-dimensional sandwich mesh fabric is selected, which includes an upper warp-knitted mesh fabric, a lower warp-knitted mesh fabric, and multiple polyester (PE) monofilaments located between the upper warp-knitted mesh fabric and the lower warp-knitted mesh fabric. The multiple polyester monofilaments are vertically arranged, and connect the upper warp-knitted mesh fabric with the lower warp-knitted mesh fabric. The three-dimensional sandwich mesh is cut to form a single-sided structure layer. The three-dimensional sandwich mesh fabric is specifically woven from 300 D PE monofilaments. The protruding monofilaments have a height of 3 mm.
2) Lamination of an intermediate layer. The hook layer is taken as a substrate. 300 g/m² of PE staple fibers are laid on a lower surface of the substrate, and then the hook layer is subjected to needle punching by an RY1-4000 non-woven fabric needle punching machine. The needle punching process involves the following parameters: needle density: 15,000 needles/m²; stroke frequency: 350 times/min; feeding speed: 1.1 m/min; and needle stroke: 1.10 cm.
3) Heat treatment. The hook layer with the protruding monofilaments on the surface is conveyed to a flame laminating machine through a mesh belt. The hook layer is passed through the flame laminating machine at a speed of 20 m/min. The surface of the hook layer is 4 cm far from a flame that is at 730°C and is 4 cm high. The protruding monofilaments are burnt by the flame, and are moved away from the flame by a roller. After the heat treatment, the protruding monofilaments have a height of 1-2 mm. Top ends of the protruding filaments are cooled to form small bumps.
4) Preparation of the anti-slip layer. Anti-slip treatment is performed using a thermoplastic elastomer on a back of the intermediate layer.
5) Cutting. After the anti-slip treatment, the carpet pad is cut according to its size.

### Embodiment 2

This embodiment not forming part of the invention relates to a heat-treated carpet pad. As shown in FIG. 1, the carpet pad includes hook layer 1, intermediate layer 2, and anti-slip layer 3 sequentially from top to bottom. A surface of the hook layer is provided with protruding monofilaments.

The carpet pad is prepared by heat treatment as follows.
1) Material selection. A PE fabric with protruding monofilaments on a surface is selected, which is prepared by a tatting process. The protruding monofilaments have a height of 5 mm and a fineness of 400 D.
2) Lamination process. The woven fabric is laminated with a non-woven fabric through a hot melt adhesive.
3) Heat treatment. The laminated fabric prepared by the above steps is put into a mesh-belt type oven, with the protruding monofilament facing upwards. A top part of the oven is provided with a far-infrared tube. The far-infrared tube is 6 cm far from a mesh belt, and is at 800°C. During high-temperature irradiation, bent small bumps are formed on a surface of a three-dimensional sandwich mesh fabric that is cut. The mesh belt runs at a speed of 10 m/min. The protruding monofilaments are moved away by a roller. After the heat treatment, the protruding monofilaments have a height of 1-3 mm.
4) Preparation of the anti-slip layer. Anti-slip treatment is performed using foam latex on a back of the non-woven fabric.
5) Cutting. After the anti-slip treatment, the carpet pad is cut according to its size.
6) Hemming. The cut carpet pad is hemmed.

### Embodiment 3

This embodiment according to the invention relates to a heat-treated carpet pad. As shown in FIG. 2, the carpet pad includes hook layer 1, flock layer 4, and anti-slip layer 3 sequentially from top to bottom. A surface of the hook layer is provided with protruding monofilaments.

The carpet pad is prepared by heat treatment as follows.
1) Selection of a non-woven fabric. A warp-knitted PE woven fabric with a weight of 85 g/m² and a density of 114×63 is taken as a substrate. 140 g/m² PE staple fibers are laid on the substrate, and the substrate is conveyed to an RY1-4000 non-woven fabric needle punching machine. A fiber mesh of the fabric is repeatedly punctured by a needle of the needle punching machine to form a 3 mm high pile layer on one side of the substrate, thereby forming a composite substrate. The needle punching process involves the following parameters: needle density: 15,000 needles/m²; stroke frequency 450 times/min; feeding speed 1.8 m/min; and needle stroke 2.1 cm.
2) Tufting process. 20 D polypropylene (PP) monofilaments are tufted on the non-woven fabric. The protruding monofilaments have a height of 6 mm.
3) Heat treatment. The tufted fabric is conveyed to a flame laminating machine through a mesh belt. The tufted fabric is passed through the flame laminating machine at a speed of 16 m/min, and the surface of the tufted fabric is 4 cm far from a flame that is at 780°C and 3 cm high. After the burning, the fabric is moved away from the flame by a roller. After the heat treatment, the monofilaments have a height of 2-4 mm.
4) Preparation of the anti-slip layer. Anti-slip treatment is performed using an ethyl vinyl acetate (EVA) foam layer on a back of the non-woven fabric.
5) Cutting. After the anti-slip treatment, the carpet pad is cut according to its size.
6) Hemming. The cut carpet pad is hemmed.

### Embodiment 4

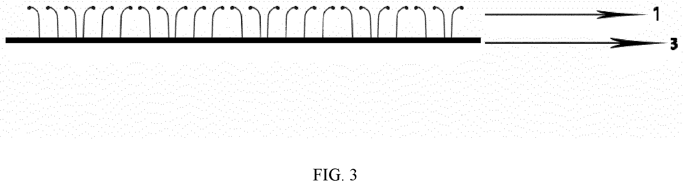

This embodiment not forming part of the invention relates to a heat-treated carpet pad. As shown in FIG. 3, the carpet pad includes hook layer 1 and anti-slip layer 3 sequentially from top to bottom. A surface of the hook layer is provided with protruding monofilaments.

The carpet pad is prepared by heat treatment as follows.
1) Material selection. A warp-knitted nylon fabric with cut protruding monofilaments is selected. The protruding monofilaments have a height of 4 mm and a fineness of 2,000 D.
2) Heat treatment. The nylon fabric is conveyed to a flame laminating machine through a mesh belt. The nylon fabric is passed through the flame laminating machine at a speed of 19 m/min. A surface of the nylon fabric is 3 cm far from a flame that is at 690°C and 3 cm high. After burning, the nylon fabric is moved away from the flame by a roller. After the heat treatment, the protruding monofilaments have a height of 1-3 mm.
3) Preparation of the anti-slip layer. Anti-slip treatment is performed using a thermoplastic elastomer.
4) Cutting. After the anti-slip treatment, the carpet pad is cut according to its size.

### Embodiment 5

This embodiment not forming part of the invention relates to a heat-treated carpet pad. As shown in FIG. 1, the carpet pad includes hook layer 1, intermediate layer 2, and anti-slip layer 3 sequentially from top to bottom. A surface of the hook layer is provided with protruding monofilaments.

The carpet pad is prepared by heat treatment as follows.
1) Material selection. A warp-knitted PE fabric with cut protruding monofilaments is selected. The protruding monofilaments have a height of 5 mm and a fineness of 500 D.
2) Heat treatment. The PE fabric is conveyed to a flame laminating machine through a mesh belt. The PE fabric is passed through the flame laminating machine at a speed of 20 m/min. A surface of the PE fabric is 2 cm far from a flame that is at 730°C and 4 cm high. After burning, the PE fabric is moved away from the flame by a roller. After the heat treatment, the protruding monofilaments have a height of 2-4 mm.
3) Needle puncturing process. The above fabric is taken as a substrate. 300 g/m² of PE staple fibers are laid on the substrate, and then the fabric is subjected to needle punching by an RY1-4000 non-woven fabric needle punching machine. The needle punching process involves the following parameters: needle density: 15,000 needles/m²; stroke frequency: 350 times/min; feeding speed: 1.1 m/min; and needle stroke: 1.10 cm.
4) Preparation of the anti-slip layer. Anti-slip treatment is performed using a hot melt adhesive on a back of the non-woven fabric.
5) Cutting. After the anti-slip treatment, the carpet pad is cut according to its size.

### Embodiment 6

This embodiment not forming part of the invention relates to a heat-treated carpet pad. As shown in FIG. 3, the carpet pad includes hook layer 1 and anti-slip layer 3 sequentially from top to bottom. A surface of the hook layer is provided with protruding monofilaments.

The carpet pad is prepared by heat treatment as follows.
1) Tufting process. 260 D PE monofilaments are tufted on the non-woven fabric. The protruding monofilaments have a height of 5 mm.
2) Heat treatment. The PE monofilaments are treated by tufting and cutting processes to form a fabric with protruding monofilaments. The fabric with protruding monofilaments is conveyed into an oven through a mesh belt, and is passed through the oven at a speed of 12 m/min to melt/soften the protruding monofilaments on the hook layer at 180°C. Then the fabric is moved out of the oven through a roller behind the oven, and is positioned between upper and lower pressure rollers of a rolling traction device. The protruding monofilaments of the hook layer in a softened state are passed through the pressure rollers, and are thus bent. The pressure rollers apply a pressure of 3 kg.
3) Preparation of the anti-slip layer. Anti-slip treatment is performed using a thermoplastic elastomer.
4) Cutting. After the anti-slip treatment, the carpet pad is cut according to its size.

### Comparative Example 1

This comparative example relates to a carpet pad, which is prepared by a method basically the same as the preparation method in Embodiment 1, except that the protruding monofilaments have a height of 15 mm.

The carpet pad is prepared by heat treatment as follows.
1) Material selection. A three-dimensional sandwich mesh fabric is selected, which includes an upper warp-knitted mesh fabric, a lower warp-knitted mesh fabric, and multiple polyester (PE) monofilaments located between the upper warp-knitted mesh fabric and the lower warp-knitted mesh fabric. The multiple polyester monofilaments are vertically arranged, and connect the upper warp-knitted mesh fabric with the lower warp-knitted mesh fabric. The three-dimensional sandwich mesh is cut to form a single-sided structure layer. The three-dimensional sandwich mesh fabric is specifically woven from 300 D PE monofilaments. The protruding monofilaments have a height of 15mm.
2) Lamination of an intermediate layer. The hook layer is taken as a substrate. 300 g/m² of PE staple fibers are laid on a lower surface of the substrate, and then the hook layer is subjected to needle punching by an RY1-4000 non-woven fabric needle punching machine. The needle punching process involves the following parameters: needle density: 15,000 needles/m²; stroke frequency: 350 times/min; feeding speed: 1.1 m/min; and needle stroke: 1.10 cm.
3) Heat treatment. The hook layer with the protruding monofilaments on the surface is conveyed to a flame laminating machine through a mesh belt. The hook layer is passed through the flame laminating machine at a speed of 20 m/min. The surface of the hook layer is 4 cm far from a flame that is at 730°C and is 5cm high. The protruding monofilaments are burnt by the flame, and are moved away from the flame by a roller. After the heat treatment, the protruding monofilaments have a height of 15 mm. Top ends of the protruding filaments are cooled to form small bumps.
4) Preparation of the anti-slip layer. Anti-slip treatment is performed using a thermoplastic elastomer on a back of the intermediate layer.
5) Cutting. After the anti-slip treatment, the carpet pad is cut according to its size.

### Comparative Example 2

This comparative example relates to a carpet pad, which is prepared by a method basically the same as the preparation method in Embodiment 1, except that the protruding monofilaments have a height of 0.3 mm.

The carpet pad is prepared by heat treatment as follows.
1) Material selection. A three-dimensional sandwich mesh fabric is selected, which includes an upper warp-knitted mesh fabric, a lower warp-knitted mesh fabric, and multiple polyester (PE) monofilaments located between the upper warp-knitted mesh fabric and the lower warp-knitted mesh fabric. The multiple polyester monofilaments are vertically arranged, and connect the upper warp-knitted mesh fabric with the lower warp-knitted mesh fabric. The three-dimensional sandwich mesh is cut to form a single-sided structure layer. The three-dimensional sandwich mesh fabric is specifically woven from 300 D PE monofilaments. The protruding monofilaments have a height of 0.3mm.
2) Lamination of an intermediate layer. The hook layer is taken as a substrate. 300 g/m² of PE staple fibers are laid on a lower surface of the substrate, and then the hook layer is subjected to needle punching by an RY1-4000 non-woven fabric needle punching machine. The needle punching process involves the following parameters: needle density: 15,000 needles/m²; stroke frequency: 350 times/min; feeding speed: 1.1 m/min; and needle stroke: 1.10 cm.
3) Heat treatment. The hook layer with the protruding monofilaments on the surface is conveyed to a flame laminating machine through a mesh belt. The hook layer is passed through the flame laminating machine at a speed of 20 m/min. The surface of the hook layer is 4 cm far from a flame that is at 730°C and is 5cm high. The protruding monofilaments are burnt by the flame, and are moved away from the flame by a roller. After the heat treatment, the protruding monofilaments have a height of 0.1-0.3 mm. Top ends of the protruding filaments are cooled to form small bumps.
4) Preparation of the anti-slip layer. Anti-slip treatment is performed using a thermoplastic elastomer on a back of the intermediate layer.
5) Cutting. After the anti-slip treatment, the carpet pad is cut according to its size.

### Comparative Example 3

This comparative example relates to a carpet pad, which is prepared by a method basically the same as the preparation method in Embodiment 1, except that the protruding monofilaments have a fineness of 10 D.

The carpet pad is prepared by heat treatment as follows.
1) Material selection. A three-dimensional sandwich mesh fabric is selected, which includes an upper warp-knitted mesh fabric, a lower warp-knitted mesh fabric, and multiple polyester (PE) monofilaments located between the upper warp-knitted mesh fabric and the lower warp-knitted mesh fabric. The multiple polyester monofilaments are vertically arranged, and connect the upper warp-knitted mesh fabric with the lower warp-knitted mesh fabric. The three-dimensional sandwich mesh is cut to form a single-sided structure layer. The three-dimensional sandwich mesh fabric is specifically woven from 1 D PE monofilaments. The protruding monofilaments have a height of 3 mm.
2) Lamination of an intermediate layer. The hook layer is taken as a substrate. 300 g/m² of PE staple fibers are laid on a lower surface of the substrate, and then the hook layer is subjected to needle punching by an RY1-4000 non-woven fabric needle punching machine. The needle punching process involves the following parameters: needle density: 15,000 needles/m²; stroke frequency: 350 times/min; feeding speed: 1.1 m/min; and needle stroke: 1.10 cm.
3) Heat treatment. The hook layer with the protruding monofilaments on the surface is conveyed to a flame laminating machine through a mesh belt. The hook layer is passed through the flame laminating machine at a speed of 20 m/min. The surface of the hook layer is 4 cm far from a flame that is at 730°C and is 5cm high. The protruding monofilaments are burnt by the flame, and are moved away from the flame by a roller. After the heat treatment, the protruding monofilaments have a height of 0.1-0.3 mm. Top ends of the protruding filaments are cooled to form small bumps.
4) Preparation of the anti-slip layer. Anti-slip treatment is performed using a thermoplastic elastomer on a back of the intermediate layer.
5) Cutting. After the anti-slip treatment, the carpet pad is cut according to its size.

### Comparative Example 4

This comparative example relates to a carpet pad, which is prepared by a method basically the same as the preparation method in Embodiment 1, except that the protruding monofilaments have a fineness of 5,000 D.

The carpet pad is prepared by heat treatment as follows.
1) Material selection. A three-dimensional sandwich mesh fabric is selected, which includes an upper warp-knitted mesh fabric, a lower warp-knitted mesh fabric, and multiple polyester (PE) monofilaments located between the upper warp-knitted mesh fabric and the lower warp-knitted mesh fabric. The multiple polyester monofilaments are vertically arranged, and connect the upper warp-knitted mesh fabric with the lower warp-knitted mesh fabric. The three-dimensional sandwich mesh is cut to form a single-sided structure layer. The three-dimensional sandwich mesh fabric is specifically woven from 210 D PE monofilaments. The protruding monofilaments have a height of 3 mm.
2) Lamination of an intermediate layer. The hook layer is taken as a substrate. 300 g/m² of PE staple fibers are laid on a lower surface of the substrate, and then the hook layer is subjected to needle punching by an RY1-4000 non-woven fabric needle punching machine. The needle punching process involves the following parameters: needle density: 15,000 needles/m²; stroke frequency: 350 times/min; feeding speed: 1.1 m/min; and needle stroke: 1.10 cm.
3) Heat treatment. The hook layer with the protruding monofilaments on the surface is conveyed to a flame laminating machine through a mesh belt. The hook layer is passed through the flame laminating machine at a speed of 20 m/min. The surface of the hook layer is 4 cm far from a flame that is at 730°C and is 5cm high. The protruding monofilaments are burnt by the flame, and are moved away from the flame by a roller. After the heat treatment, the protruding monofilaments have a height of 0.1-0.3 mm. Top ends of the protruding filaments are cooled to form small bumps.
4) Preparation of the anti-slip layer. Anti-slip treatment is performed using a thermoplastic elastomer on a back of the intermediate layer.
5) Cutting. After the anti-slip treatment, the carpet pad is cut according to its size.

### Performance Tests

### I. Firmness test

1. A 30 cm × 30 cm heat-treated carpet pad in Embodiment 1 was overlapped with a 30 cm × 30 cm knitted fabric. The overlapped fabric was rolled twice with a 6 kg roller, and was subjected to three lateral peel force tests by a tensile testing machine. The test results were 214.87 Newton, 235.213 Newton, and 198.186 Newton, respectively.
2. A 30 cm × 30 cm anti-slip adhesive cushion provided by Chinese Patent Application CN201921334346. X was overlapped with a 30 cm × 30 cm knitted fabric. The overlapped fabric was rolled twice with a 6 kg roller, and was subjected to three lateral peel force tests by a tensile testing machine. The test results were 52.128 Newton, 52.128 Newton, and 53.252 Newton.
3. A 30 cm × 30 cm heat-treated carpet pad in Embodiment 1 was overlapped with a 30 cm × 30 cm knitted fabric. The overlapped fabric was rolled twice with a 6 kg roller, and was subjected to three upward peel force tests by a tensile testing machine. The test results were 5.258 Newton, 5.587 Newton, and 6.487 Newton, respectively.
4. A 30 cm × 30 cm anti-slip adhesive cushion provided by Chinese Patent Application CN201921334346. X was overlapped with a 30 cm × 30 cm knitted fabric. The overlapped fabric was rolled twice with a 6 kg roller, and was subjected to three upward peel force tests by a tensile testing machine. The test results were 1.387 Newton, 1.325 Newton, and 1.467 Newton.

The tests show that compared to the anti-slip adhesive cushion provided by Chinese Patent Application CN 201921334346. X, the heat-treated anti-slip and moisture-proof carpet pad of the present disclosure has a greater bonding force, a greater friction force, and greater firmness.

### II. Disassembly life test

1. A 30 cm × 30 cm heat-treated carpet pad in Embodiment 3 and a carpet surface layer were overlapped with each other, rolled twice with a 6 kg roller, and subjected to 20 longitudinal and transverse disassembly tests by a tensile testing machine. The surface was intact without damage, and there were no monofilaments falling off.
2. A 30 cm × 30 cm heat-treated carpet pad provided by Chinese Patent Application CN201921334346.X and a carpet surface layer were overlapped with each other, rolled twice with a 6 kg roller, and subjected to 20 longitudinal and transverse disassembly tests by a tensile testing machine. There were some monofilaments falling off the surface.

The tests show that compared to that provided by Chinese Patent Application CN2019107593, the heat-treated carpet pad of the present disclosure has a greater bonding force and greater firmness, and significantly reduces the falling off of monofilaments.

### III. Bonding force test

A 30 cm × 30 cm heat-treated carpet pad in Embodiment 1 and a carpet surface layer were overlapped with each other, and were moved back and forth by a hand. The carpet pad and the carpet were firmly bonded, and the carpet was not displaced.

A 30 cm × 30 cm heat-treated carpet pad in Comparative Example 1 and a carpet surface layer were overlapped with each other, and were moved back and forth by a hand. The carpet was significantly displaced and could not be fixed.

A 30 cm × 30 cm heat-treated carpet pad in Comparative Example 2 and a carpet surface layer were overlapped with each other, and were moved back and forth by a hand. Due to the small height of the protruding monofilaments, the hooking effect of the protruding monofilaments on the carpet was poor.

A 30 cm × 30 cm heat-treated carpet pad in Comparative Example 3 and a carpet surface layer were overlapped with each other, and were moved back and forth by a hand. The protruding monofilaments were too thin to support and fix the carpet.

A 30 cm × 30 cm heat-treated carpet pad in Comparative Example 4 and a carpet surface layer were overlapped with each other, and were moved back and forth by a hand. The protruding monofilaments were too thick, posing a risk of pricking or even hurting.

## Claims

1. A carpet pad, comprising a hook layer (1) and an anti-slip layer (3), wherein an upper surface of the top hook layer (1) is provided with protruding monofilaments in a bent shape; and top ends of the protruding monofilaments are provided with bumps formed by melting/softening the protruding monofilaments;
**characterized in that** the carpet pad further comprises a flock layer (4), wherein the hook layer (1), the flock layer (4) and the anti-slip layer (3) are sequentially from top to bottom; the flock layer (4) has a height which is lower than a height of the hook layer (1); and the protruding monofilaments and the flock layer (4) of the carpet pad are configured to be detachably combinable with a carpet surface layer.

2. The carpet pad according to claim 1, wherein the protruding monofilaments have a height of 0.50 mm-10 mm and a fineness of 18 DTEX-4,400 DTEX.

3. The carpet pad according to claim 1, wherein the upper surface of the top hook layer (1) is provided with 6-80 protruding monofilaments per square centimeter.

4. The carpet pad according to claim 1, wherein the protruding monofilaments are made of one selected from the group consisting of polyester (PE), polypropylene (PP), and nylon.

5. The carpet pad according to claim 1, wherein the top hook layer (1) has a thickness of 0.50 mm-10 mm.

6. A preparation method of the carpet pad according to claim 1, comprising the following steps:
A1: preparation of the top hook layer (1): preparing a cut pile fabric with the protruding monofilaments on an upper surface to form the top hook layer (1);
A2: heat treatment of the protruding monofilaments: melting/softening, by a heat treatment process, the top ends of the protruding monofilaments on the top hook layer (1), and cooling the top ends of the protruding monofilaments to form the small bumps, wherein the protruding monofilaments are inclined irregularly and bent; and
A3: preparation of the bottom anti-slip layer (3): preparing the bottom anti-slip layer (3) on a lower surface of the top hook layer (1).

7. The preparation method according to claim 6, wherein in step A2, the heat treatment is implemented by flame burning, and specifically comprises: placing the top hook layer (1) above a flame of a flame laminating machine to melt/soften the top ends of the protruding monofilaments on the top hook layer (1), wherein the flame is at 400°C-1,000°C, 0.1 cm-10 cm high, and approximately 1 cm-5 cm far from the top hook layer (1); moving, by a roller behind the flame laminating machine, the burnt fabric away from the flame; and cooling the top ends of the protruding monofilaments to form the small bumps, wherein the protruding monofilaments are inclined irregularly and bent.

8. The preparation method according to claim 6, wherein in step A2, the heat treatment is implemented by far-infrared baking, and specifically comprises: placing the top hook layer (1) in a mesh-belt type far-infrared oven to melt/soften the top ends of the protruding monofilaments on the top hook layer (1), wherein a top part of the mesh-belt type far-infrared oven is provided with a far-infrared tube, and the far-infrared tube is 0 cm-20 cm far from a carpet and configured to emit a far-infrared ray at 180°C-800°C; and cooling the top ends of the protruding monofilaments to form the small bumps, wherein the protruding monofilaments are inclined irregularly and bent.

9. The preparation method according to claim 6, wherein in step A2, the heat treatment is implemented by a heating oven, and specifically comprises: placing the top hook layer (1) in the heating oven to melt/soften the top ends of the protruding monofilaments on the top hook layer (1) at 120°C-230°C; moving, by a mesh belt or a roller, the top hook layer (1) away from a flame; and positioning the top hook layer (1) between pressure rollers of a rolling traction device; and allowing the protruding monofilaments of the top hook layer (1) in a softened state to pass through the pressure rollers, such that the protruding monofilaments are bent and the top ends of the protruding monofilaments are formed into the small bumps.

## Patentansprüche

1. Teppichunterlage, umfassend eine Hakenschicht (1) und eine Antirutschschicht (3), wobei eine obere Oberfläche der oberseitigen Hakenschicht (1) mit hervorstehenden Monofilamenten in gebogener Form versehen ist und die oberseitigen Enden der hervorstehenden Monofilamente mit Wölbungen versehen sind, die durch Schmelzen/Erweichen der hervorstehenden Monofilamente geformt sind,
**dadurch gekennzeichnet, dass** die Teppichunterlage ferner eine Flockschicht (4) umfasst, wobei die Hakenschicht (1), die Flockschicht (4) und die Antirutschschicht (3) nacheinander von oben nach unten angeordnet sind, die Flockschicht (4) eine Höhe aufweist, die niedriger ist als eine Höhe der Hakenschicht (1), und die hervorstehenden Monofilamente und die Flockschicht (4) der Teppichunterlage ausgelegt sind, um abnehmbar mit einer Teppichoberflächenschicht kombinierbar zu sein.

2. Teppichunterlage nach Anspruch 1, wobei die hervorstehenden Monofilamente eine Höhe von 0,50 mm bis 10 mm und eine Feinheit von 18 DTEX bis 4.400 DTEX aufweisen.

3. Teppichunterlage nach Anspruch 1, wobei die obere Oberfläche der oberseitigen Hakenschicht (1) mit 6-80 hervorstehenden Monofilamenten pro Quadratzentimeter versehen ist.

4. Teppichunterlage nach Anspruch 1, wobei die hervorstehenden Monofilamente aus einem Material bestehen, das aus der Gruppe, bestehend aus Polyester (PE), Polypropylen (PP) und Nylon, ausgewählt ist.

5. Teppichunterlage nach Anspruch 1, wobei die oberseitige Hakenschicht (1) eine Dicke von 0,50 mm bis 10 mm aufweist.

6. Verfahren zur Vorbereitung der Teppichunterlage nach Anspruch 1, umfassend die folgenden Schritte:
A1: Vorbereitung der oberseitigen Hakenschicht (1): Vorbereiten eines geschnittenen Florgewebes mit den hervorstehenden Monofilamenten auf einer oberen Oberfläche, um die oberseitige Hakenschicht (1) zu formen;
A2: Wärmebehandlung der hervorstehenden Monofilamente: Schmelzen/Erweichen der oberseitigen Enden der hervorstehenden Monofilamente auf der oberseitigen Hakenschicht (1) durch einen Wärmebehandlungsprozess und Kühlen der oberseitigen Enden der hervorstehenden Monofilamente, um die kleinen Wölbungen zu formen, wobei die hervorstehenden Monofilamente unregelmäßig geneigt und gebogen sind, und
A3: Vorbereitung der unterseitigen Antirutschschicht (3): Vorbereiten der unterseitigen Antirutschschicht (3) auf einer unteren Oberfläche der oberseitigen Hakenschicht (1).

7. Vorbereitungsverfahren nach Anspruch 6, wobei die Wärmebehandlung in Schritt A2 durch Beflammen umgesetzt wird und insbesondere Folgendes umfasst: Platzieren der oberseitigen Hakenschicht (1) über einer Flamme einer Flammkaschiermaschine, um die oberseitigen Enden der hervorstehenden Monofilamente auf der oberseitigen Hakenschicht (1) zu schmelzen/zu erweichen, wobei die Flamme bei 400 °C bis 1.000 °C, 0,1 cm bis 10 cm hoch und ungefähr 1 cm bis 5 cm von der oberseitigen Hakenschicht (1) entfernt ist; Bewegen des beflammten Gewebes durch eine Walze hinter der Flammkaschiermaschine wegführend von der Flamme und Kühlen der oberseitigen Enden der hervorstehenden Monofilamente, um die kleinen Wölbungen zu formen, wobei die hervorstehenden Monofilamente unregelmäßig geneigt und gebogen sind.

8. Vorbereitungsverfahren nach Anspruch 6, wobei die Wärmebehandlung in Schritt A2 durch Backen mit Ferninfrarotstrahlung umgesetzt wird und insbesondere Folgendes umfasst: Platzieren der oberseitigen Hakenschicht (1) in einem Ferninfrarotofen vom Gitterbandtyp, um die oberseitigen Enden der hervorstehenden Monofilamente auf der oberseitigen Hakenschicht (1) zu schmelzen/zu erweichen, wobei ein oberseitiger Teil des Ferninfrarotofens vom Gitterbandtyp mit einer Ferninfrarot-Röhre versehen ist und die Ferninfrarot-Röhre 0 cm bis 20 cm von einem Teppich entfernt und ausgelegt ist, um einen Ferninfrarotstrahl bei 180 °C bis 800 °C abzustrahlen, und Kühlen der oberseitigen Enden der hervorstehenden Monofilamente, um die kleinen Wölbungen zu formen, wobei die hervorstehenden Monofilamente unregelmäßig geneigt und gebogen sind.

9. Vorbereitungsverfahren nach Anspruch 6, wobei die Wärmebehandlung in Schritt A2 durch einen Heizofen umgesetzt wird und insbesondere Folgendes umfasst: Platzieren der oberseitigen Hakenschicht (1) in dem Heizofen, um die oberseitigen Enden der hervorstehenden Monofilamente auf der oberseitigen Hakenschicht (1) bei 120 °C bis 230 °C zu schmelzen/zu erweichen; Bewegen der oberseitigen Hakenschicht (1) durch ein Gitterband oder eine Walze wegführend von einer Flamme und Positionieren der oberseitigen Hakenschicht (1) zwischen den Druckwalzen einer Walztraktionsvorrichtung und Erlauben, dass die hervorstehenden Monofilamente der oberseitigen Hakenschicht (1) in einem erweichten Zustand durch die Druckwalzen geführt werden, sodass die hervorstehenden Monofilamente gebogen werden und die oberseitigen Enden der hervorstehenden Monofilamente zu kleinen Wölbungen geformt werden.

## Revendications

1. Sous-tapis, comprenant une couche d'accroche (1) et une couche antidérapante (3), dans lequel une surface supérieure de la couche d'accroche (1) supérieure est pourvue de monofilaments en saillie de forme courbée ; et les extrémités supérieures des monofilaments en saillie sont pourvues de bosses formées par fusion/ramollissement des monofilaments en saillie ;
**caractérisé en ce que** le sous-tapis comprend en outre une couche floquée (4), dans lequel la couche d'accroche (1), la couche floquée (4) et la couche antidérapante (3) sont disposées en séquence du haut vers le bas ; la couche floquée (4) présente une hauteur qui est inférieure à une hauteur de la couche d'accroche (1) ; et les monofilaments en saillie et la couche floquée (4) du sous-tapis sont configurés pour être combinable de façon détachable avec une couche de surface de tapis.

2. Sous-tapis selon la revendication 1, dans lequel les monofilaments en saillie présentent une hauteur de 0,50 mm - 10 mm et une finesse de 18 DTEX - 4400 DTEX.

3. Sous-tapis selon la revendication 1, dans lequel la surface supérieure de la couche d'accroche (1) supérieure est pourvue de 6-80 monofilaments en saillie par centimètre carré.

4. Sous-tapis selon la revendication 1, dans lequel les monofilaments en saillie sont constitués d'un parmi le polyester (PE), le polypropylène (PP) et le nylon.

5. Sous-tapis selon la revendication 1, dans lequel la couche d'accroche (1) supérieure présente une épaisseur de 0,50 mm - 10 mm.

6. Procédé de préparation du sous-tapis selon la revendication 1, comprenant les étapes suivantes :
A1 : préparation de la couche d'accroche (1) supérieure : préparation d'un tissu à poils coupés avec les monofilaments en saillie sur une surface supérieure pour former la couche d'accroche (1) supérieure ;
A2 : traitement thermique des monofilaments en saillie : fusion/ramollissement, par un processus de traitement thermique, des extrémités supérieures des monofilaments en saillie sur la couche d'accroche (1) supérieure, et refroidissement des extrémités supérieures des monofilaments en saillie pour former les petites bosses, dans lequel les monofilaments en saillie sont inclinés de manière irrégulière et pliés ; et
A3 : préparation de la couche antidérapante (3) inférieure : préparation de la couche antidérapante (3) inférieure sur une surface inférieure de la couche d'accroche (1) supérieure.

7. Procédé de préparation selon la revendication 6, dans lequel à l'étape A2, le traitement thermique est mis en œuvre par combustion à la flamme, et comprend en particulier : le placement de la couche d'accroche (1) supérieure au-dessus d'une flamme d'une machine de stratification à la flamme pour faire fondre/ramollir les extrémités supérieures des monofilaments en saillie sur la couche d'accroche (1) supérieure, dans lequel la flamme est à 400°C - 1000°C, d'une hauteur de 0,1 cm - 10 cm et éloignée d'environ 1 cm - 5 cm de la couche d'accroche (1) supérieure ; le déplacement, par un rouleau derrière la machine de stratification à la flamme, du tissu brûlé à distance de la flamme ; et le refroidissement des extrémités supérieures des monofilaments en saillie pour former les petites bosses, dans lequel les monofilaments en saillie sont inclinés de manière irrégulière et pliés.

8. Procédé de préparation selon la revendication 6, dans lequel à l'étape A2, le traitement thermique est mis en œuvre par cuisson à infrarouge lointain, et comprend en particulier : le placement de la couche d'accroche (1) supérieure dans un four à infrarouge lointain de type à bande maillée pour faire fondre/ramollir les extrémités supérieures des monofilaments en saillie sur la couche d'accroche (1) supérieure, dans lequel une partie supérieure du four à infrarouge lointain de type à bande maillée est pourvue d'un tube à infrarouge lointain, et le tube à infrarouge lointain est éloigné de 0 cm - 20 cm d'un tapis et configuré pour émettre un rayon infrarouge lointain à 180°C - 800°C ; et le refroidissement des extrémités supérieures des monofilaments en saillie pour former les petites bosses, dans lequel les monofilaments en saillie sont inclinés de manière irrégulière et pliés.

9. Procédé de préparation selon la revendication 6, dans lequel à l'étape A2, le traitement thermique est mis en œuvre par un four de chauffage, et comprend en particulier : le placement de la couche d'accroche (1) supérieure dans le four de chauffage pour faire fondre/ramollir les extrémités supérieures des monofilaments en saillie sur la couche d'accroche (1) supérieure à 120°C - 230°C ; le déplacement, par une bande maillée ou un rouleau, de la couche d'accroche (1) supérieure à distance d'une flamme ; et le positionnement de la couche d'accroche (1) supérieure entre des rouleaux de pression d'un dispositif de traction roulant; et la permission aux monofilaments en saillie de la couche d'accroche (1) supérieure dans un état ramolli de passer à travers les rouleaux de pression, de telle sorte que les monofilaments en saillie sont pliés et les extrémités supérieures des monofilaments en saillie sont formées en petites bosses.
